(19) Europäisches Patentamt

European Patent Office

Office européen des brevets

(11) **EP 4 641 527 A1**

(12) **EUROPEAN PATENT APPLICATION**
published in accordance with Art. 153(4) EPC

(43) Date of publication:
**29.10.2025 Bulletin 2025/44**

(21) Application number: **23905586.6**

(22) Date of filing: **21.11.2023**

(51) International Patent Classification (IPC):
**G06V 40/16** *(2022.01)*

(52) Cooperative Patent Classification (CPC):
**G06F 3/01; G06V 40/16; G06V 40/18**

(86) International application number:
**PCT/CN2023/132910**

(87) International publication number:
**WO 2024/131417 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 CN 202211632776**

(71) Applicant: **Beijing Zitiao Network Technology Co.,
Ltd.
Beijing 100190 (CN)**

(72) Inventors:
• **CHEN, Peibin**
  **Beijing 100028 (CN)**
• **ZHANG, Xijin**
  **Beijing 100028 (CN)**
• **LENG, Fuxing**
  **Beijing 100028 (CN)**

(74) Representative: **Marks & Clerk LLP
15 Fetter Lane
London EC4A 1BW (GB)**

(54) **EXPRESSION DRIVING METHOD AND APPARATUS, DEVICE, AND STORAGE MEDIUM**

(57) The present disclosure provides an expression driving method, apparatus, device and storage medium, wherein the method includes: acquiring an image to be processed of a target object, the image to be processed including an eye region of the target object; determining an expression coefficient of at least one dimension of the target object based on the image to be processed, the expression coefficient of at least one dimension including a first eye coefficient and a second eye coefficient, wherein the first eye coefficient is configured for representing an eyelid spacing of the target object, and the second eye coefficient is configured for representing line-of-sight information of the target object; and driving an avatar based on the determined expression coefficient of at least one dimension.

Acquiring an image to be processed of a target object, wherein the image to be processed comprises an eye region of the target object — S1

Determining an expression coefficient of at least one dimension of the target object based on the image to be processed, the expression coefficient of at least one dimension comprising a first eye coefficient and a second eye coefficient, wherein the first eye coefficient is configured for representing an eyelid spacing of the target object, and the second eye coefficient is configured for representing line-of-sight information of the target object — S3

Driving an avatar based on the determined expression coefficient of at least one dimension — S5

Fig. 1

EP 4 641 527 A1

# Description

## CROSS-REFERENCE TO RELATED APPLICATIONS

This application is based on and claims priority from the CN application No. 202211632776.6 filed on Dec. 19, 2022, which is hereby incorporated by reference in its entirety into the present application.

## TECHNICAL FIELD

The present disclosure relates to the technical field of image processing, and in particular, an expression driving method, apparatus, device and storage medium.

## BACKGROUND ART

Expression driving takes user's facial images as input, and expression coefficients of different portions of the user's face can be output by means of a driving algorithm. These expression coefficients can be applied to a simulation process of facial expressions.

## SUMMARY

On one aspect, the present disclosure provides an expression driving method, the method including: acquiring an image to be processed of a target object, the image to be processed including an eye region of the target object; determining an expression coefficient of at least one dimension of the target object based on the image to be processed, the expression coefficient of at least one dimension including a first eye coefficient and a second eye coefficient, the first eye coefficient is configured for representing an eyelid spacing of the target object, and the second eye coefficient is configured for representing line-of-sight information of the target object; driving an avatar based on the determined expression coefficient of at least one dimension.

On another aspect, the present disclosure provides an expression driving apparatus, the apparatus including: an image acquiring unit configured for acquiring an image to be processed of a target object, the image to be processed including an eye region of the target object; an expression coefficient determining unit configured for determining an expression coefficient of at least one dimension of the target object based on the image to be processed, the expression coefficient of at least one dimension including a first eye coefficient and a second eye coefficient, the first eye coefficient is configured for representing an eyelid spacing of the target object, and the second eye coefficient is configured for representing line-of-sight information of the target object; an expression driving unit configured for driving an avatar based on the determined expression coefficient of at least one dimension.

On a further aspect, the present disclosure provides an electronic device including a processor and a memory configured for storing a computer program, which when executed by the processor, implements the expression driving method.

On a further yet aspect, the present disclosure provides a computer-readable storage medium configured for storing a computer program, which when executed by a processor, implements the expression driving method.

## BRIEF DESCRIPTION OF THE DRAWINGS

The features and advantages of various embodiments of the present disclosure will be more clearly understood by referring to the accompanying drawings, which are schematic and should not be construed as limiting the disclosure in any way, in which:

Fig. 1 shows a schematic diagram of steps of an expression driving method in one embodiment of the present disclosure;
Fig. 2 shows a schematic diagram of eye feature points in one embodiment of the present disclosure;
Fig. 3 shows a schematic diagram of line-of-sight information in one embodiment of the present disclosure;
Fig. 4 shows an exploded schematic view of a line-of-sight offset component in one embodiment of the present disclosure;
Fig. 5 shows a schematic diagram of functional modules of an expression driving device in one embodiment of the present disclosure; and
Fig. 6 shows a schematic structural diagram of an electronic device in one embodiment of the present disclosure.

## DETAILED DESCRIPTION OF PREFERRED EMBODIMENTS

In order to make the objectives, technical solutions and advantages of the embodiments of the present disclosure more clear, with reference to the drawings of the embodiments of the present disclosure, a clear and complete description is given below for the technical solutions of the embodiments of the present disclosure. Obviously, the embodiments described below are only part of the embodiments, rather than all of the embodiments. All the other embodiments that can be obtained by those skilled in the art based on the embodiments of the present disclosure without any creative effort are included in the protection scope of the present disclosure.

When simulating a facial expression, an expression coefficient of a user's eye region usually plays a big role. At present, in order to accurately obtain the expression coefficient of the eye region, it is usually necessary to estimate the user's identity information and posture information. However, in some application scenarios, the user's identity information and posture information cannot be accurately obtained. For example, when a user wears virtual reality glasses, usually, one can only shoot the user's eye images through virtual reality glasses, but cannot obtain the user's identity information and posture information, which leads to the inability to accurately simulate the user's eye expressions in some application scenarios based on the existing methods.

According to the technical solution provided by one or more embodiments of the present disclosure, after acquiring the image to be processed of the target object, determining an expression coefficient of at least one dimension of the target object according to an identified result of an eye region in the image to be processed, the expression coefficient of at least one dimension including a first eye coefficient and a second eye coefficient, the first eye coefficient represents an eyelid spacing of the target object, and the second eye coefficient represents line-of-sight information of the target object. In this way, the first eye coefficient can represent an overall state of eye contour, while the second eye coefficient can represent an accurate position of pupil, and an eye expression can be simulated by combining the first eye coefficient and the second eye coefficient, so that an accurate eye expression can be obtained without knowing identity information and posture information of the target object.

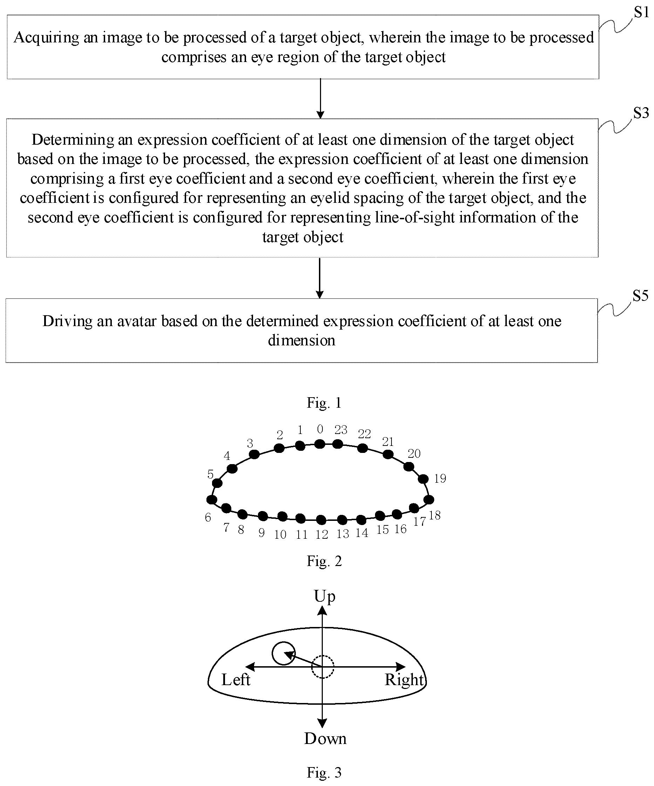

An embodiment of the present disclosure provides an expression driving method. Referring to Fig. 1, the method includes steps of the following:

S1: acquiring an image to be processed of a target object, and the image to be processed includes an eye region of the target object.

In this embodiment, the image to be processed of the target object can be acquired by an image acquisition device, and the image to be processed can includes the eye region of the target object. The image acquisition device can only acquire an eye image of the target object, or acquire a facial image of the target object, and cut out the eye image from the facial image. For example, in practical application, when the target object wears virtual reality glasses, the eye image of the target user can be acquired through the virtual reality glasses. The present disclosure does not limit the acquisition mode of the image to be processed.

S3: determining an expression coefficient of at least one dimension of the target object based on the image to be processed, the expression coefficient of at least one dimension including a first eye coefficient and a second eye coefficient, the first eye coefficient is configured for representing an eyelid spacing of the target object, and the second eye coefficient is configured for representing line-of-sight information of the target object.

In this embodiment, after the image to be processed of the target object is collected, eye feature points can be identified from the image to be processed by a key point identification algorithm. Besides, the line-of-sight information can be identified from the image to be processed by a line-of-sight tracking algorithm.

It should be noted that the image to be processed can include both eyes of the target object. In actual processing, local areas of each eye can be processed one by one, so as to obtain the eye feature points and line-of-sight information corresponding to each eye. Considering that the eyes of the target object are usually symmetrical, in order to simplify the process of data processing, the local area of one eye in the image to be processed can be inverted symmetrically, and then the invented local area can be processed by the same set of algorithms to obtain the corresponding eye feature points and line-of-sight information. Subsequently, the eye feature points and line-of-sight information can be symmetrically inverted again, so that the eye feature points and line-of-sight information consistent with the actual situation can be obtained. In this way, through two times of symmetrical inversion, the same set of algorithms can be used to complete the identifying process for both eyes.

Besides, when the image acquisition device is located on the virtual reality device, limited by the structural features of the virtual reality device itself and the arrangement position of the image acquisition device, sometimes the image of only one eye of the target user can be acquired, so that eye images corresponding to the left eye and the right eye of the target object can be acquired by at least two image acquisition devices respectively.

The following describes the technical solution of the present disclosure from the perspective of a single eye. For a single eye, the above key point identification algorithm can obtain a fixed number of eye feature points. As shown in Fig. 2, the number of eye feature points can be 24, and each eye feature point can have its own serial number according to its location. Serial numbers 0 to 5 and 19 to 23 can be located in the upper eyelid, serial numbers 6 and 18 are located in the corners of the eye, serial numbers 7 to 17 are located in the lower eyelid, and serial numbers 0 and 23 can correspond to two eye feature points located in the middle of the upper eyelid. Of course, the position and serial numbers of eye feature points mentioned above are only a feasible instance in practical application examples, and the number and position of eye feature points can be different according to different key point algorithms, which is not limited by this disclosure.

In this embodiment, the line-of-sight information identified by the line-of-sight tracking algorithm may include a line-of-sight direction and a line-of-sight offset. In practical application, when the line-of-sight looks straight ahead, the position of the pupil (circle shown by the dotted line) can be the central position by default, and four standard directions can be determined based on this central position. As shown in Fig. 3, these four standard directions can correspond to up, down, left and right respectively. The vector between the current position of the pupil (circle shown by solid line) and the central position in the image to be processed can be taken as the line-of-sight information identified by the line-of-sight tracking algorithm. The direction represented by the vector can be taken as the above-mentioned line-of-sight direction, and the modulus of the vector can be taken as the above-mentioned line-of-sight offset.

In this embodiment, after the eye feature points in the image to be processed are identified, the eyelid spacing in the image to be processed can be determined by the eye feature points at the designated positions, which eyelid spacing can represent a blinking state of the target object.

In particular, taking the eye feature points shown in Fig. 2 as an example, the eye corner feature points and a target feature point located at a designated position of the upper eyelid can be identified from the eye feature points. The eye corner feature points can be the eye feature points numbered 6 and 18 in Fig. 2, and the target feature point can be the eye feature point located in the middle of the upper eyelid. For example, the target feature point can be the eye feature point numbered 0 in Fig. 2. After obtaining the above-mentioned eye corner feature points and target feature point, a straight line formed by the eye corner feature points can be determined, and a distance between the target feature point and the straight line can be taken as the eyelid spacing in the image to be processed.

In one embodiment, if the number of eye feature points at the middle position of the upper eyelid is multiple, then all these eye feature points can be regarded as target feature points. For example, in Fig. 2, eye feature points numbered 0 and 23 can be taken as target feature points. Then, for each target feature point, the distance between the target feature point and the above-mentioned straight line can be determined, and finally an average value of each distance can be taken as the eyelid spacing in the image to be processed. By calculating an average value, calculation accuracy of eyelid spacing can be improved.

Of course, there are more ways to determine the eyelid spacing in practical application. For example, a first eye feature point (e.g., the point numbered 0) in the middle of the upper eyelid and a second eye feature point (e.g., the point numbered 13) in the middle of the lower eyelid can be directly selected, and then a distance between the first eye feature point and the second eye feature point can be taken as the eyelid spacing. According to different practical application scenarios and data accuracy requirements, eye feature points can be selected flexibly, and eyelid spacing can be calculated based on the selected eye feature points.

In this embodiment, after the eyelid spacing is calculated, the first eye coefficient representing the blinking state of the target object can be calculated based on the eyelid spacing. In practical application, a changing process of the value of the first eye coefficient from large to small can correspond to a process of the eye of the target object from closing to opening. For example, when the eye of the target object is closed (corresponding to the smallest eyelid spacing), the value of the first eye coefficient can be the largest. When the eye of the target object is open, the value of the first eye coefficient can be the smallest. Of course, according to different application scenarios, the relationship between the first eye coefficient and the eyelid spacing can also be flexibly adjusted, as long as the first eye coefficient can represent the blinking state of the target object.

In a specific application scenario, multiple frames of images to be processed of a target object can be acquired in advance by an image acquisition device, and these multiple frames of images to be processed can form a sequence of images to be processed with a time sequence relationship. By gathering a statistic of the distribution of eyelid spacing in each image to be processed in the image sequence to be processed, a first spacing threshold and a second spacing threshold can be determined. The first spacing threshold may be the minimum value in the statistic of the eyelid spacing, and the second spacing threshold may be the maximum value in the statistic of the eyelid spacing. Of course, considering that the maximum value and minimum value may not reflect the distribution law of most eyelid spacings, in practical application, the statistic of the eyelid spacing can also be sorted from small to large. Then the median value is taken as the above-mentioned second spacing threshold, and the value of eyelid spacing ranked at 1% position is taken as the above-mentioned first spacing threshold. In practical application, the values of the first distance threshold and the second distance threshold can be taken in various manners, as long as they can reflect the distribution law of most eyelid spacings.

In practical application, the image acquisition device can shoot an eye video, and each frame of image to be processed in the eye video can form an image sequence to be processed. For any image to be processed in the image sequence to be processed, the eyelid spacing represented by each image can be determined in the above manner.

In this embodiment, after the first and second spacing thresholds are determined in advance, the first eye coefficient corresponding to the current eyelid spacing in the image to be processed can be calculated based on the first and second spacing thresholds. In particular, in an application example, a first difference between the eyelid spacing and the first spacing threshold can be calculated first, and a second difference between the second spacing threshold and the first spacing threshold can be calculated then. Then, according to a ratio of the first difference to the second difference, a first reference coefficient is generated. The larger the ratio is, the smaller the corresponding first reference coefficient is. After generating the first reference coefficient, it can be determined whether the first reference coefficient is greater than a specified parameter threshold. If the first reference coefficient is less than or equal to the specified parameter threshold, the first reference coefficient can be normalized, and the value of the first reference coefficient can be limited between 0 and 1, and the normalized value can be taken as the first eye coefficient corresponding to the eyelid spacing.

If the first reference coefficient is greater than the specified parameter threshold, the first reference coefficient can be constrained to be a second reference coefficient by a preset constraint function. Thereafter, the second reference coefficient can be normalized, and the value of the second reference coefficient is limited between 0 and 1, and the normalized value can be taken as the first eye coefficient corresponding to the eyelid spacing.

Calculation process of the first reference coefficient and the second reference coefficient can be expressed by the following formula:

$$P1 = 1 - \frac{d_t - d_{min}}{d_{max} - d_{min}}$$

$$P2 = \frac{1}{1 + \exp(-8(P1 - 0.45))}$$

The specified parameter threshold in the above step can be 0.5, P1 represents the first reference coefficient, $d_t$ represents the current eyelid spacing, $d_{min}$ represents the first spacing threshold, $d_{max}$ represents the second spacing threshold, and P2 represents the second reference coefficient. The calculation formula of P2 can be taken as the preset constraint function.

It should be noted that the above formulas for calculating the first reference coefficient and the second reference coefficient are only a feasible embodiment, which does not mean that the first reference coefficient and the second reference coefficient can only be calculated according to the above formulas when calculating the first eye coefficient. As long as the final calculated first eye coefficient can meet the current standard of expression coefficient.

For example, in another application example, after the eyelid spacing in the image to be processed is obtained, the first eye coefficient corresponding to the eyelid spacing can be directly calculated by way of an inverse proportional operation. Through this simple process, the corresponding first eye coefficient can be obtained without the help of the image sequence to be processed and complicated calculation formulas. The specific way to solve the first eye coefficient still needs to be determined according to the actual application scenario requirements. By gathering a statistic of the eyelid spacing of each image to be processed in the image sequence to be processed, and based on the result of the statistic, the first eye coefficient can have high accuracy, thus improving the accuracy of subsequent eye expression simulation.

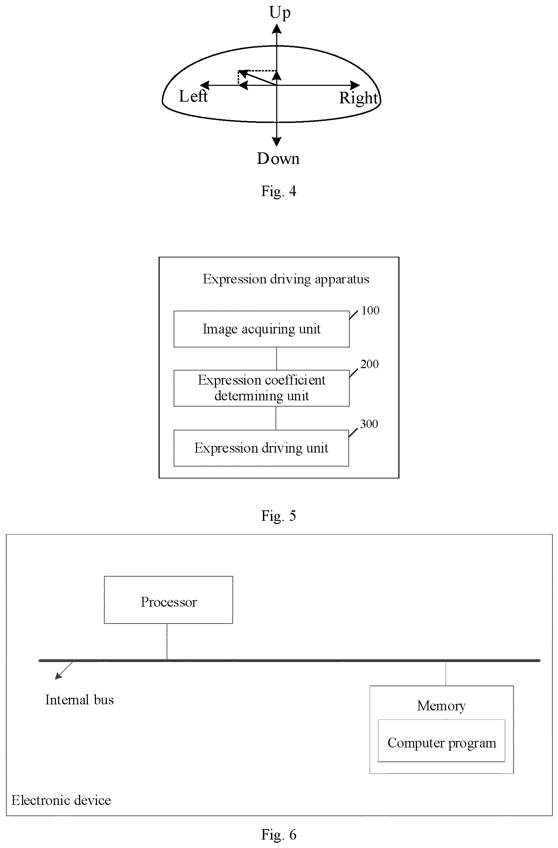

In this embodiment, any line-of-sight direction can be projected in a standard direction shown in Fig. 3. In view of this, the line-of-sight offset represented by line-of-sight information can be mapped to a plurality of preset standard directions according to the line-of-sight direction represented by the line-of-sight information, so as to obtain an offset component in each standard direction. Referring to Fig. 4, the line-of-sight offset can be projected in two standard directions, i.e. left and up, so as to obtain the offset components in these two standard directions.

After the offset component in the standard direction is obtained, the component coefficient corresponding to the offset component in each standard direction can be generated, and the coefficient vector formed by each component coefficient is taken as the second eye coefficient corresponding to the line-of-sight information. It should be noted that, if the offset component in a standard direction is 0, then the component coefficient in that standard direction is also 0 by default, and no additional calculation is needed. That is, in the case shown in Fig. 4, only the component coefficients of the left and upper standard directions need to be calculated, and the component coefficients can be 0 for both the right and lower standard directions.

In an application example, in order to improve the calculation accuracy of component coefficients, the image sequence to be processed can usually be collected in advance, and the sequence of the offset components corresponding to each standard direction can be formed by analyzing the image sequence to be processed. For each standard direction, a statistic of the distribution of each offset component in the sequence of the offset components can be gathered, and the first line-of-sight threshold and the second line-of-sight threshold corresponding to the standard direction can be determined based on the result of the statistic. The first line-of-sight threshold can be the minimum value in the sequence of the offset components, and the second line-of-sight threshold can be the maximum value in the sequence of the offset components. Of course, based on the description of the previous embodiment, in order to reflect the distribution law of the offset components, the offset components in the sequence of the offset components can be sorted from small to large, and then the median thereof can be taken as the second line-of-sight threshold, and the value of the offset component ranked at the 1% position can be taken as the first line of-sight threshold. In a practical application, the values of the first line-of-sight threshold and the second line-of-sight threshold can be taken in various manners, as long as they can reflect the distribution law of offset components.

In particular, for any one of the target standard directions, after the first line-of-sight threshold and the second line-of-sight threshold corresponding to the target standard direction are determined in advance, the component coefficient corresponding to the offset component in the target standard direction can be calculated based on the first line-of-sight threshold and the second line-of-sight threshold. The larger the offset component is, the smaller the corresponding component coefficient is.

In a specific application example, a third difference between the offset component in the target standard direction and the first line-of-sight threshold can be calculated, and a fourth difference between the second line-of-sight threshold and the first line-of-sight threshold can be calculated. Then, a line-of-sight reference coefficient can be generated according to a ratio of the third difference to the fourth difference. Finally, by normalizing the line-of-sight reference coefficient, the normalized value can be taken as the component coefficient corresponding to the offset component in the target standard direction.

The formula for calculating the above component coefficient can be as follows:

$$E_i = 1 - \frac{f_i - f_{imin}}{f_{imax} - f_{imin}}$$

Where $E_i$ represents the component coefficient corresponding to the offset component in the $i^{th}$ standard direction, $f_i$ represents the offset component in the $i^{th}$ standard direction, $f_{imin}$ represents the first line-of-sight threshold in the $i^{th}$ standard direction, and $f_{imax}$ represents the second line-of-sight threshold in the $i^{th}$ standard direction.

Assuming that there are four standard directions at present, the second eye coefficient corresponding to the current line-of-sight information can be expressed in the form of a coefficient vector after obtaining the respective component coefficients of the four standard directions:

$$(E_1, E_2, E_3, E_4)$$

S5: driving an avatar based on the determined expression coefficient of at least one dimension.

In this embodiment, after the first eye coefficient and the second eye coefficient are obtained, the first eye coefficient and the second eye coefficient can be combined into a vector, which can be taken as the eye expression coefficient of the image to be processed. For example, the combined eye expression coefficient can be expressed as:

$$(E_1, E_2, E_3, E_4, P)$$

Where, $E_1$ to $E_4$ represent the second eye coefficient, and P represents the first eye coefficient.

In this embodiment, after the eye expression coefficient corresponding to the image to be processed is generated, the eye expression can be directly simulated based on the eye expression coefficient. Besides, facial expression of the target object can be simulated on the basis of the eye expression coefficient. In practical application, facial expression simulation usually needs the expression coefficient of each feature dimension of the face. For example, in some scenes, it is necessary to simulate a corresponding facial expression according to expression coefficients of 51 feature dimensions of the face.

When simulating the whole facial expression of the target object, the default facial expression can be loaded first, and each facial feature dimension in the default facial expression can have an original expression coefficient. The default facial expression can be regarded as an expression template, which indicates that the face of the target object does not have any expression actions at present. Thereafter, the original expression coefficient of the feature dimension of the eye region can be corrected by using the eye expression coefficient generated by the above embodiment of the present disclosure, so that the current expression action of the target object can be accurately simulated based on the corrected expression coefficient.

In a specific application example, a large number of training samples can be used to train an expression coefficient identification model, so that the expression coefficient of at least one dimension corresponding to the image to be processed can be accurately output. The training sample can be each image frame in the facial video acquired by the image acquisition device, and these image frames can include the eye region of the target object. Multiple image frames contained in the facial video can be used as an image sample sequence. For each image sample sequence, the first spacing threshold and the second spacing threshold related to the eyelid spacing in the image sample sequence, as well as the first line-of-sight threshold and the second line-of-sight threshold related to the sight information, can be determined by the key point identification algorithm and the line-of-sight tracking algorithm according to the way of the above step. Thereafter, based on the above-mentioned first spacing threshold, second spacing threshold, first line-of-sight threshold and second line-of-sight threshold, the expression coefficient of at least one dimension of each training sample in the image sample sequence can be determined in the manner described in the above step, and the expression coefficient of at least one dimension can include a first eye coefficient representing eyelid spacing and a second eye coefficient representing line-of-sight information.

In this specific example, the calculated expression coefficient of at least one dimension can be taken as ground truth of the training sample. When the expression coefficient identification model is trained by training samples, a predicted value output by the expression coefficient identification model can be monitored by using the ground truth of the training samples. Through an error between the ground truth and the predicted value, the expression coefficient identification model can be continuously corrected until a preset training convergence condition is reached, and the model training process can be completed. The preset training convergence condition can mean that the error between the predicted value and the true value output by the expression coefficient identification model is within an allowable range, and it can also mean that the number of iterative corrections of the expression coefficient recognition model reaches a specified number.

In this specific example, after training and obtaining an expression coefficient identification model that meets the requirements, the image to be processed of the target object can be processed by using the expression coefficient identification model. In particular, the image to be processed of the target object can be input into the expression coefficient identification model, and the expression coefficient identification model can output the corresponding expression coefficient of at least one dimension. According to the description of the training stage, the expression coefficient of at least one dimension may include a first eye coefficient representing eyelid spacing and a second eye coefficient representing line-of-sight information. After obtaining the expression coefficient of at least one dimension of the image to be processed, a virtual image of the target object can be driven based on the expression coefficient of at least one dimension.

It can be seen from the above that the technical solution provided by the present disclosure does not need to reconstruct the face of the target user when generating the expression coefficient of the image to be processed, thus saving the process of 3D calculation and greatly improving the efficiency of expression driving. Besides, in the process of generating the first eye coefficient and the second eye coefficient, a statistic of the image sequence to be processed and the sequence of the offset components are gathered, so that the first eye coefficient and the second eye coefficient generated based on information of the statistic have better continuity and stability when the virtual image is subsequently driven, and jitter is avoided. Further, through the key point identification technology and the line-of-sight tracking technology, the present disclosure can quickly generate the ground truth of the training sample, and does not depend on the optimization and training of the long link, thereby improving the efficiency of model training.

It can be seen from the above description that the technical solution provided by one or more embodiments of the present disclosure can simulate the eye expression according to the identified result of eye feature points and line-of-sight information in the image to be processed after obtaining the image to be processed of the target object. In particular, according to positions of eye feature points in the image to be processed, the eyelid spacing in the image to be processed can be determined. The eyelid spacing can indicate a blinking state of eye, and the corresponding first eye coefficient can be obtained by quantifying the eyelid spacing. The line-of-sight information can track pupil position, and the second eye coefficient representing the pupil position can be obtained by processing the line-of-sight direction and line-of-sight offset.

It can be seen that the first eye coefficient can represent the overall state of the eye contour, while the second eye coefficient can represent the accurate position of the pupil. An eye expression can be simulated by combining the first eye coefficient and the second eye coefficient, so that an accurate eye expression can be obtained without knowing identity information and posture information of the target object.

Referring to Fig. 5, an embodiment of the present disclosure also provides an expression driving apparatus, the apparatus including:

an image acquiring unit 100 configured for acquiring an image to be processed of a target object, the image to be processed including an eye region of the target object;

an expression coefficient determining unit 200 configured for determining an expression coefficient of at least one dimension of the target object based on the image to be processed, the expression coefficient of at least one dimension including a first eye coefficient and a second eye coefficient, the first eye coefficient is configured for representing an eyelid spacing of the target object, and the second eye coefficient is configured for representing line-of-sight information of the target object, and

an expression driving unit 300 configured for driving an avatar based on the determined expression coefficient of at least one dimension.

For the specific processing logic of each functional module, one can refer to the description of the above-mentioned method implementation, and it will not be repeated here.

Referring to Fig. 6, the present disclosure further provides an electronic device including a processor and a memory configured for storing a computer program, which when executed by the processor, implements the expression driving method.

Each unit explained in the above embodiment can be implemented by a computer chip or a product with certain functions. A typical implementation device is a computer. In particular, the computer can be, for example, a personal computer, a laptop computer, a cellular phone, a camera phone, a smart phone, a personal digital assistant, a media player, a navigation device, an email device, a game console, a tablet computer, a wearable device or a combination of any of these devices.

For the convenience of description, when describing the above device, the functions are divided into various units and described separately. Of course, the function of each unit can be realized in one or more pieces of software and/or hardware when the application is implemented.

The present disclosure further provides a computer-readable storage medium configured for storing a computer program, which when executed by a processor, implements the expression driving method.

The present disclosure further provides a computer program, including an instruction which, when executed by a processor, causes the processor to execute the method according to an embodiment of the present disclosure.

The present disclosure further provides a computer program product, including an instruction which, when executed by a processor, causes the processor to execute the method according to an embodiment of the present disclosure.

The processor can be a Central Processing Unit (CPU). The processor can also be any other general processor, a Digital Signal Processor (DSP), an Application Specific Integrated Circuits (ASIC), a Field-Programmable Gate Array (FPGA) or any other chip as a programmable logic device, a discrete gate or transistor logic device, a discrete hardware component, etc., or a combination of the above-mentioned chips.

As a non-transient computer-readable storage medium, the memory is configured to store non-transient software programs, non-transient computer-executable programs and modules, such as program instructions/-modules corresponding to the method in the embodiment of the present disclosure. The processor executes various functional applications and data processing of the processor by running non-transient software programs, instructions and modules stored in the memory, so as to implement the method in the embodiment of the above-mentioned method.

The memory can include a storage program area and a storage data area, the storage program area is configured to store an operating system, applications needed by at least one function; the storage data area is configured to store data created by the processor, etc. Besides, the memory can include a high-speed random access memory, and can further include a non-transient memory, such as at least one disk memory device, flash memory device, or any other non-transient solid-state memory device. In some embodiments, the memory may optionally include memories remotely located with respect to the processor, and these remote memories may be connected to the processor through networks. Examples of the above-mentioned networks include, but are not limited to, the Internet, an intranet, a local area network, a mobile communication network, and combinations thereof.

It can be understood by those skilled in the art that all or part of the processes in the methods of the above embodiments can be completed by instructing related hardware through a computer program, which can be stored in a computer-readable storage medium, and when executed, the program can include the processes of the above embodiments. The storage medium can be a magnetic disk, an optical disk, a Read-Only Memory (ROM), a Random Access Memory (RAM), a Flash Memory, a Hard Disk Drive (HDD) or a Solid-State Drive (SSD). The storage medium may also include a combination of the above kinds of memories.

Each embodiment in this description is described in a progressive way, and only the same and similar parts between the embodiments can be referred to each other, and each embodiment focuses on the differences from other embodiments. In particular, for embodiments of apparatus, device and storage medium, since they basically correspond to the method embodiments, for relevant points thereof, one may refer to partial description of the method embodiments.

The above is only examples of the present application, and is not used to limit the present application. Various modifications and variations will occur to those skilled in the art. Any modification, equivalent substitution, improvement, etc. made within the spirit and principle of the present application should be included in the scope of the claims of the present application.

Although the embodiments of the present disclosure have been described in connection with the drawings, various modifications and variations can be made by those skilled in the art without departing from the spirit and scope of the present disclosure, and such modifications and variations are all within the scope defined by the appended claims.

**Claims**

1. An expression driving method, comprising:

   acquiring an image to be processed of a target object, the image to be processed comprising an eye region of the target object;
   determining an expression coefficient of at least one dimension of the target object based on the image to be processed, the expression coefficient of at least one dimension comprising a first eye coefficient and a second eye coefficient, wherein the first eye coefficient is configured for representing an eyelid spacing of the target object, and the second eye coefficient is configured for representing line-of-sight information of the target object; and
   driving an avatar based on the determined expression coefficient of at least one dimension.

2. The method according to claim 1, wherein the eyelid spacing of the target object is determined based on positions of eye feature points in the image to be processed; wherein the eye feature points comprise eye corner feature points and a target feature point located at a designated position of an upper eyelid.

3. The method according to claim 2, wherein the eyelid spacing is determined by:
   determining a straight line formed by the eye corner feature points, and a distance between the target feature point and the straight line is taken as the eyelid spacing in the image to be processed.

**4.** The method according to claim 3, wherein if a number of target feature point is multiple, the method further comprises:
determining distances between each target feature point and the straight line, and an average value of the distances is taken as the eyelid spacing in the image to be processed.

**5.** The method according to claim 1, wherein the line-of-sight information comprises a line-of-sight direction and a line-of-sight offset; wherein the line-of-sight offset is mapped to a plurality of preset standard directions based on the line-of-sight direction to obtain an offset component in each standard direction, and the second eye coefficient is determined by a component coefficient corresponding to each offset component.

**6.** The method according to claim 1, wherein the determining an expression coefficient of at least one dimension of the target object based on the image to be processed comprises:

inputting the image to be processed into a trained expression coefficient identification model to output the expression coefficient of at least one dimension corresponding to the image to be processed through the expression coefficient identification model; and
wherein the expression coefficient identification model is trained based on training samples in an image sample sequence.

**7.** The method according to claim 6, wherein an expression coefficient of the training sample in the image sample sequence is generated by:

identifying eye feature points and line-of-sight information in the training sample;
determining an eyelid spacing represented by the training sample according to positions of the eye feature points in the training sample, and generating a first eye coefficient corresponding to the eyelid spacing;
generating a second eye coefficient corresponding to the line-of-sight information according to the line-of-sight direction and line-of-sight offset represented by the line-of-sight information; and
taking the first eye coefficient and the second eye coefficient as expression coefficients of the training sample.

**8.** The method according to claim 7, wherein the generating a first eye coefficient corresponding to the eyelid spacing comprises:

according to the image sample sequence in which the training sample is located, gathering a statistic of the eyelid spacing in each training sample in the image sample sequence; and determining a first spacing threshold and a second spacing threshold from the statistic of the counted eyelid spacing, and calculating a first eye coefficient corresponding to the eyelid spacing based on the first spacing threshold and the second spacing threshold; wherein the first spacing threshold is smaller than the second spacing threshold.

**9.** The method according to claim 8, wherein the calculating a first eye coefficient corresponding to the eyelid spacing comprises:

calculating a first difference between the eyelid spacing and the first spacing threshold, and calculating a second difference between the second spacing threshold and the first spacing threshold;
generating a first reference coefficient according to a ratio of the first difference to the second difference; and
if the first reference coefficient is less than or equal to a specified parameter threshold, normalizing the first reference coefficient, and taking a normalized value as the first eye coefficient corresponding to the eyelid spacing.

**10.** The method according to claim 9, wherein the method further comprises:

if the first reference coefficient is greater than the specified parameter threshold, constraining the first reference coefficient to be a second reference coefficient by a preset constraint function; and
normalizing the second reference coefficient, and taking a normalized value as the first eye coefficient corresponding to the eyelid spacing.

**11.** The method according to claim 7, wherein the generating a second eye coefficient corresponding to the line-of-sight information comprises:

mapping the line-of-sight offset to a plurality of preset standard directions according to the line-of-sight direction to obtain an offset component in each standard direction; and
generating a component coefficient corresponding to the offset component in each standard direction, and taking a coefficient vector formed by each component coefficient as the second eye coefficient corresponding to the line-of-sight information.

**12.** The method according to claim 11, wherein the generating a component coefficient corresponding to the offset component in each standard direction comprises:

for any target standard direction of each standard direction, determining a first line-of-sight threshold and a second line-of-sight threshold corresponding to the target standard direction, wherein the first line-of-sight threshold and the second line-of-sight threshold are located in a sequence of the offset components corresponding to the target standard direction, and the first line-of-sight threshold is smaller than the second line-of-sight threshold; and

calculating the component coefficient corresponding to the offset component in the target standard direction based on the first line-of-sight threshold and the second line-of-sight threshold.

13. The method according to claim 12, wherein the calculating the component coefficient corresponding to the offset component in the target standard direction comprises:

calculating a third difference between the offset component in the target standard direction and the first line-of-sight threshold, and calculating a fourth difference between the second line-of-sight threshold and the first line-of-sight threshold;

generating a line-of-sight reference coefficient according to a ratio of the third difference to the fourth difference; and

normalizing the line-of-sight reference coefficient, and taking a normalized value as the component coefficient corresponding to the offset component in the target standard direction.

14. An expression driving apparatus, comprising:

an image acquiring unit configured for acquiring an image to be processed of a target object, the image to be processed comprising an eye region of the target object;

an expression coefficient determining unit configured for determining expression coefficient of at least one dimension of the target object based on the image to be processed, the expression coefficient of at least one dimension comprising a first eye coefficient and a second eye coefficient, wherein the first eye coefficient is configured for representing an eyelid spacing of the target object, and the second eye coefficient is configured for representing line-of-sight information of the target object; and

an expression driving unit configured for driving an avatar based on the determined expression coefficient of at least one dimension.

15. An electronic apparatus comprising a processor, and a memory configured for storing a computer program, which when executed by the processor, implements the method according to any one of claims 1-13.

16. A computer-readable storage medium, wherein the computer-readable storage medium is configured for storing a computer program, which when executed by a processor, implements the method according to any one of claims 1-13.

Acquiring an image to be processed of a target object, wherein the image to be processed comprises an eye region of the target object

$\curvearrowright$ S1

Determining an expression coefficient of at least one dimension of the target object based on the image to be processed, the expression coefficient of at least one dimension comprising a first eye coefficient and a second eye coefficient, wherein the first eye coefficient is configured for representing an eyelid spacing of the target object, and the second eye coefficient is configured for representing line-of-sight information of the target object

$\curvearrowright$ S3

Driving an avatar based on the determined expression coefficient of at least one dimension

$\curvearrowright$ S5

Fig. 1

Fig. 2

Fig. 3

Up

Left

Right

Down

Fig. 4

Expression driving apparatus

Image acquiring unit          / 100

Expression coefficient
determining unit              / 200

Expression driving unit       / 300

Fig. 5

Processor

Internal bus

Memory

Computer program

Electronic device

Fig. 6

## INTERNATIONAL SEARCH REPORT

| | International application No. |
|---|---|
| | **PCT/CN2023/132910** |

**A. CLASSIFICATION OF SUBJECT MATTER**

G06V40/16(2022.01)i

According to International Patent Classification (IPC) or to both national classification and IPC

**B. FIELDS SEARCHED**

Minimum documentation searched (classification system followed by classification symbols)

IPC: G06V, G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 表情, 虚拟, 眼, 视线, 间距, 距离, expression, virtual, eye, sight, space, distance

**C. DOCUMENTS CONSIDERED TO BE RELEVANT**

| Category* | Citation of document, with indication, where appropriate, of the relevant passages | Relevant to claim No. |
|---|---|---|
| PX | CN 115953813 A (BEIJING BYTEDANCE NETWORK TECHNOLOGY CO., LTD.) 11 April 2023 (2023-04-11)<br>claims 1-16 | 1-16 |
| Y | CN 111798551 A (NETEASE (HANGZHOU) NETWORK CO., LTD.) 20 October 2020 (2020-10-20)<br>description, paragraphs [0093]-[0241] | 1-8, 11, 14-16 |
| Y | CN 115335865 A (GUANGZHOU CVTE ELECTRONIC TECHNOLOGY CO., LTD.) 11 November 2022 (2022-11-11)<br>description, paragraphs [0043]-[0121] | 1-8, 11, 14-16 |
| A | CN 108876879 A (TENCENT TECHNOLOGY (SHENZHEN) CO., LTD.) 23 November 2018 (2018-11-23)<br>entire document | 1-16 |
| A | CN 110807364 A (INSTITUTE OF COMPUTING TECHNOLOGY, CHINESE ACADEMY OF SCIENCES) 18 February 2020 (2020-02-18)<br>entire document | 1-16 |

☑ Further documents are listed in the continuation of Box C. ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/132910** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2014021707 A (NIKON CORP.) 03 February 2014 (2014-02-03)<br>entire document | 1-16 |

Form PCT/ISA/210 (second sheet) (July 2022)

EP 4 641 527 A1

INTERNATIONAL SEARCH REPORT
Information on patent family members

International application No.
PCT/CN2023/132910

| Patent document cited in search report | | | Publication date (day/month/year) | Patent family member(s) | | | Publication date (day/month/year) |
|---|---|---|---|---|---|---|---|
| CN | 115953813 | A | 11 April 2023 | None | | | |
| CN | 111798551 | A | 20 October 2020 | None | | | |
| CN | 115335865 | A | 11 November 2022 | WO | 2022147736 | A1 | 14 July 2022 |
| CN | 108876879 | A | 23 November 2018 | US | 2019333262 | A1 | 31 October 2019 |
| | | | | WO | 2018205801 | A1 | 15 November 2018 |
| | | | | IN | 201947031163 | A | 18 October 2019 |
| CN | 110807364 | A | 18 February 2020 | None | | | |
| JP | 2014021707 | A | 03 February 2014 | None | | | |

Form PCT/ISA/210 (patent family annex) (July 2022)

15

**EP 4 641 527 A1**

REFERENCES CITED IN THE DESCRIPTION

**Patent documents cited in the description**

- CN 202211632776